# NEUE EUROPÄISCHE PATENTSCHRIFT

(11) **EP 1 282 774 B2**
(45) Veröffentlichungstag und Bekanntmachung des Hinweises auf die Entscheidung über den Einspruch: **26.09.2018**
(45) Hinweis auf die Patenterteilung: 03.09.2003
(21) Anmeldenummer: 01927846.4
(22) Anmeldetag: 31.03.2001
(51) Int. Cl.: F03D 7/04, F03D 9/00

(54) **VERFAHREN ZUM BETREIBEN EINER WINDENERGIENANLAGE SOWIE WINDENERGIEANLAGE**
METHOD FOR OPERATING A WIND POWER STATION AND WIND POWER STATION
PROCEDE POUR ACTIONNER UNE EOLIENNE

(30) Priorität: 11.05.2000 DE 10022974
(43) Veröffentlichungstag der Anmeldung: 12.02.2003
(60) Teilanmeldung: 03008602.9
(73) Patentinhaber: Wobben, Aloys, 26607 Aurich (DE)
(72) Erfinder: Wobben, Aloys, 26607 Aurich (DE)
(74) Vertreter: Eisenführ Speiser
(86) Internationale Anmeldenummer: PCT/EP2001/003705
(87) Internationale Veröffentlichungsnummer: WO 2001/086143

(56) Entgegenhaltungen:
- EP-A1- 0 223 729
- DE-A- 19 756 777
- DE-A1- 3 308 566
- DE-A1- 19 756 777
- DE-C- 368 799
- DE-U- 29 621 449
- GB-A- 2 330 256
- US-A- 4 189 648
- US-A- 4 189 648
- US-A- 5 907 192
- LYONS J P ET AL: "THE CONTROL OF VARIABLE-SPEED WIND TURBINE GENERATORS" PROCEEDINGS OF THE IEEE CONFERENCE ON DECISION AND CONTROL,XX,XX, Bd. 3, 14. Dezember 1983 (1983-12-14), Seiten 1417-1421, XP000612992

## Beschreibung

Die vorliegende Erfindung betrifft ein Verfahren zum Betreiben einer Windenergieanlage mit einem von einem Rotor antreibbaren elektrischen Generator zum Abgeben elektrischer Leistung an ein elektrisches Netz, dem die Windenergieanlage angeschlossen ist.

Aus DE 197 56 777 ist ein Verfahren zum Betreiben einer Windenergieanlage sowie eine Windenergieanlage bekannt, bei welcher die von dem Generator an das Netz abgegebene Leistung in Abhängigkeit der am elektrischen Netz anliegenden elektrischen Spannung geregelt wird.

Netz getrennt wird. Die Antriebsmaschinen, wie z. B. Dieselmotoren, Wasserräder usw. benötigen einige Zeit, um dann ihre (mechanische und elektrische) Leistung zu reduzieren. Während dieser Zeit erzeugen diese Generatoren mehr Energie als vom elektrischen Netz entnommen wird. Diese Energie wird dann für die Beschleunigung der Generatoren verbraucht. Damit steigt die Drehzahl und somit auch die Netzfrequenz an.

Da viele elektrische Geräte, z. B. Computer, Elektromotoren und dergleichen, die an das elektrische Netz angeschlossen sind, jedoch nicht auf schwankende Netzfrequenzen bzw. deren schlagartige Änderungen ausgelegt sind, kann dieses zu Schäden an elektrischen Maschinen bis zur Zerstörung dieser Maschinen führen.

Der Erfindung liegt die Aufgabe zu Grunde, die vorbeschriebenen Probleme zu beseitigen, wenn Windenergieanlagen an dem elektrischen Netz angeschlossen sind.

Erfindungsgemäß wird diese Lösung durch ein Verfahren mit den Merkmalen nach Anspruch 1 gelöst.

Es wird vorgeschlagen, falls Windenergieanlagen an solchen schwachen Netzen betrieben werden, deren (mechanische und) elektrische Leistung in Abhängigkeit der steigenden Netzfrequenz zu steuern. Damit soll ein weiterer Anstieg der Netzfrequenz verhindert werden bzw. eine Reduktion der Netzfrequenz erreicht werden.

Die Erfindung ist nachfolgend an Hand eines Ausführungsbeispiels näher erläutert:

Es zeigen:
- Fig. 1: ein Frequenz-/Leistungszeitdiagramm einer Windenergieanlage,
- Fig. 2: Seitenansicht einer Windenergieanlage,
- Fig. 3: ein Blockschaltdiagramm eines mit einem Mikroprozessor gesteuerten Wechselrichters einer Windenergieanlage,
- Fig. 4: Darstellung einer Regelungseinrichtung einer Windkraftanlage,
- Fig. 5: Darstellung einer Ankopplung einer Windenergieanlage an ein elektrisches Netz,
- Fig. 6: Alternativdarstellung zu Fig. 3.

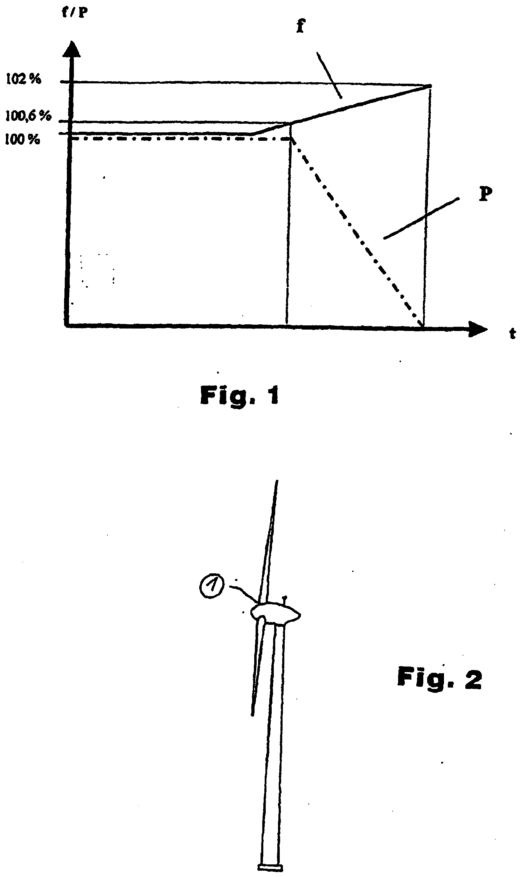

Fig. 1 zeigt die Anforderung an eine Windenergieanlage, ihre Ausgangsleistung P in Abhängigkeit der elektrischen Frequenz f des Netzes zu reduzieren. Der Wert von 100 % stellt dabei die Sollfrequenz (50 Hz, 60 Hz) des elektrischen Netzes dar. Die Werte 100,6 % bzw. 102 % sind entsprechend höhere Werte der Netzfrequenz f.

Die elektrische Leistung der Windenergieanlage wird z. B. bei einem Anstieg der Netzfrequenz um 0,6 % (also auf 100,6 %) noch nicht heruntergeregelt. Steigt danach die Netzfrequenz noch weiter an, wird die elektrische Leistung der Windenergieanlage heruntergeregelt. Im gezeigten Beispiel wird die elektrische Leistung der Windenergieanlage bei einem Anstieg der Netzfrequenz auf 102% auf Null Leistung heruntergeregelt.

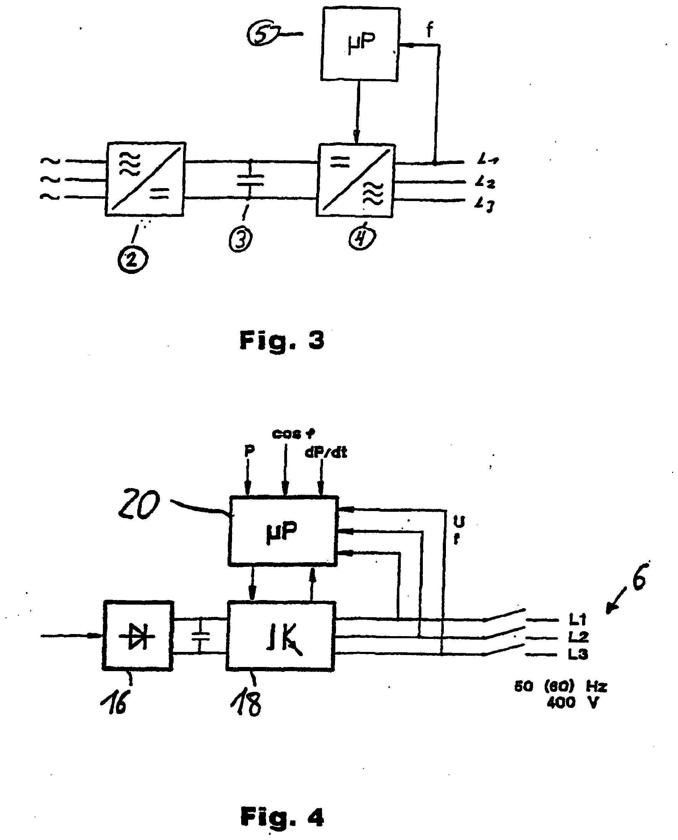

Fig. 3 zeigt ein Ausführungsbeispiel einer Windenergieanlage, die dieser Anforderung gerecht wird. Die Windenergieanlage hat verstellbare Rotorblätter (PitchRegelung der Rotorblätter), damit die mechanische Leistung der Windenergieanlage abgeregelt werden kann. Wird beispielsweise der Anstellwinkel der Rotorblätter zum Wind verstellt, kann auch die Kraft auf die Rotorblätter auf einen gewünschten Wert verringert werden. Der elektrische Wechselstrom des Generators (nicht dargestellt), welcher mit dem Rotor, der die Rotorblätter trägt, verbunden ist, wird mittels eines Gleichrichters 2 gleichgerichtet und mittels eines Kondensators 3 geglättet. Der Wechselrichter 4 formt die Gleichspannung dann in einen Wechselstrom um, der an das Netz L₁, L₂, L₃ abgegeben wird. Die Frequenz dieses Ausgangsstromes wird vom Netz vorgegeben. Die Regelungseinrichtung 5, bestehend aus einem Mikroprozessor, misst die Netzfrequenz und steuert die Leistungsschalter des Wechselrichters 4 derart, dass die Ausgangsfrequenz der Netzspannung (Netzfrequenz) entspricht. Steigt die Netzfrequenz-wie oben beschrieben - an, wird die elektrische Leistung - wie in Fig. 1 dargestellt - heruntergeregelt.

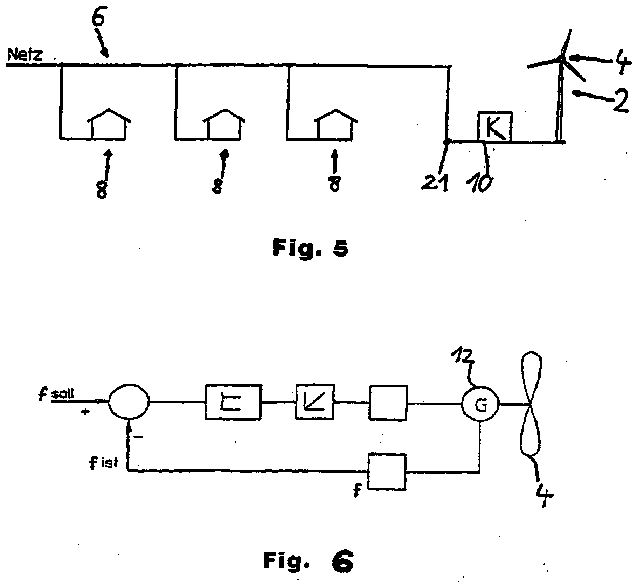

Fig. 6 veranschaulicht die erfindungsgemäße Regelungseinrichtung. Der schematisch dargestellte Rotor 4 der Windenergieanlage ist mit einem Generator G 12 gekoppelt, der eine elektrische Leistung bereitstellt, die von der Windgeschwindigkeit und somit der Windleistung abhängt. Die von dem Generator G 12 erzeugte Wechselspannung wird mittels des Wechselrichters zunächst gleichgerichtet und anschließend in eine Wechselspannung umgewandelt, die eine der Netzfrequenz entsprechende Frequenz aufweist. Mit Hilfe des Netzfrequenzaufnehmers wird die Netzspannung am Netzeinspeisungspunkt des Netzes ermittelt. Sobald die Netzfrequenz einen vorbestimmten Wert - siehe Fig. 1 - übersteigt, wird die elektrische abgegebene Leistung reduziert, um einem weiteren Ansteigen der Netzfrequenz entgegenzuwirken. Mit Hilfe der Regelungseinrichtung wird mithin die Netzfrequenz des Netzes auf einen gewünschten Netzfrequenzwert eingeregelt, zumindestens wird ihr weiterer Anstieg vermieden.

Durch eine derartig geregelte Einspeisung der von der Windenergieanlage abgegebenen Leistung können Netzfrequenzschwankungen vermieden bzw. erheblich reduziert werden.

Fig. 5 zeigt die Ankopplung einer Windenergieanlage an ein elektrisches Netz, wobei die von der Windenergieanlage 2 erzeugte elektrische Leistung am Netzeinspeisungspunkt 21 in das Netz 6 abgegeben wird. Am elektrischen Netz 6 hängen mehrere Verbraucher 8, im dargestellten Beispiel als Häuser skizziert.

Fig. 4 zeigt wesentliche Bestandteile der Steuer-Regelungseinrichtung in etwas anderer Darstellung als in Fig. 3. Die Steuer- und Regelungsanordnung weist einen Gleichrichter 16 auf, in dem die in dem Generator 12 erzeugte Wechselspannung gleichgerichtet wird. Ein mit dem Gleichrichter verbundener Frequenzumrichter 18 wandelt die zunächst im Zwischenkreis gleichgerichtete Gleichspannung in eine Wechselspannung um, die als dreiphasige Wechselspannung über die Leitung L₁, L₂ und L₃ in das Netz eingespeist wird. Der Frequenzumrichter wird mit Hilfe des Mikrocomputers 20, der Teil der gesamten Regelungseinrichtung ist, gesteuert. Hierzu ist der Mikroprozessor mit dem Frequenzumrichter 18 gekoppelt. Als Eingangsgrößen für die Regelung der Spannung, mit der die von der Windenergieanlage 2 zur Verfügung gestellten elektrischen Leistung in das Netz eingespeist wird, sind die aktuelle Netzspannung, die Netzfrequenz f, die elektrische Leistung P des Generators, der Blindleistungsfaktor cos ϕ sowie der Leistungsgradient dP/dt verwendet, in dem Mikroprozessor wird die erfindungsgemäße Regelung der einzuspeisenden Spannung mit ihrer gewünschten Netzfrequenz verwirklicht.

## Patentansprüche

1. Verfahren zum Betreiben einer Windenergieanlage mit einem Generator zum Abgeben elektrischer Leistung an ein elektrisches Netz, wobei die Windenergieanlage einen mit dem Generator gekoppelten Rotor mit Rotorblättern mit Pitchregelung aufweist,
**dadurch gekennzeichnet, dass** die von dem Generator an das Netz abgegebene Leistung in Abhängigkeit der Netzfrequenz des elektrischen Netzes geregelt bzw. eingestellt wird und dass die in das Netz eingespeiste Leistung verringert wird, wenn die Netzfrequenz mehr als 3‰ über ihrem Sollwert liegt, um einem weiteren Anstieg der Netzfrequenz entgegenzuwirken, wobei eine Regelungseinrichtung die Netzfrequenz misst und Leistungsschalter eines Wechselrichters derart steuert, dass die Ausgangsfrequenz der Netzfrequenz entspricht und wobei die mechanische Leistung der Windenergieanlage reduziert wird, indem die verstellbaren Rotorblätter in den Wind angestellt werden.

## Claims

1. Method for operating a wind-energy generating plant with a generator for supplying electrical energy to an electricity grid, wherein the wind-energy generating plant has a rotor, having rotor blades with pitch control, coupled to the generator, **characterized in that** energy supplied by the generator to the grid is controlled or adjusted as a function of the grid frequency of the electrical grid and that the energy fed to the grid is reduced when the grid frequency is more than 3 ‰ above its desired value to counteract a further increase of the grid frequency, wherein a control device measures the grid frequency and drives power switches of an inverter in such a way that the output frequency corresponds to the grid frequency and wherein the mechanical energy of the wind-energy generating plant is reduced by turning the adjustable rotor blades into the wind.

## Revendications

1. Procédé servant à faire fonctionner une éolienne avec un générateur servant à fournir une puissance électrique à un réseau électrique, dans lequel l'éolienne présente un rotor couplé au générateur avec des pales de rotor avec une régulation de pas,
**caractérisé en ce que** la puissance fournie au réseau par le générateur est régulée ou réglée en fonction de la fréquence de réseau du réseau électrique, et que la puissance injectée dans le réseau est réduite quand la fréquence de réseau est supérieure à sa valeur de consigne de plus de 3 ‰ pour contrecarrer une augmentation ultérieure de la fréquence de réseau, dans lequel un dispositif de régulation mesure la fréquence de réseau et commande des interrupteurs de puissance d'un onduleur de telle manière que la fréquence de départ correspond à la fréquence de réseau et dans lequel la puissance mécanique de l'éolienne est réduite **en ce que** les pales de rotor pouvant être ajustées sont en prise au vent.
